# EUROPEAN PATENT SPECIFICATION

(11) **EP 3 412 175 B1**
(45) Date of publication and mention of the grant of the patent: **20.04.2022**
(21) Application number: 18174763.5
(22) Date of filing: 06.06.2018
(51) Int. Cl.: A47B 87/00, F16B 12/24

(54) **FURNISHING ELEMENT AND ASSEMBLY METHOD THEREOF**
EINRICHTUNGSELEMENT UND MONTAGEVERFAHREN DAFÜR
ÉLÉMENT D'AMEUBLEMENT ET SON PROCÉDÉ D'ASSEMBLAGE

(30) Priority: 09.06.2017 IT 201700064243
(43) Date of publication of application: 12.12.2018
(73) Proprietor: Veneta Cucine S.p.A., 31056 Roncade, Treviso (IT)
(72) Inventor: ARCHIUTTI, Giacomo, 31056 Roncade, Treviso (IT)
(74) Representative: Mitola, Marco

(56) References cited:
- EP-A1- 2 883 477
- WO-A1-2004/052150
- CA-A1- 2 992 733
- FR-A1- 2 389 031
- US-A1- 2012 131 787

## Description

### SCOPE

The present invention relates to a furnishing element and the assembly method thereof.

### STATE OF THE ART

As is known, in the field of furnishing elements, it is known to use modular structures comprising a plurality of modules which must be mutually attached to each other and/or to a common structure, such as, for example, a frame which is attached to the wall.

The need for interlockability and modularity of furnishing elements arises both from the need to reduce production costs and the need to allow the user to create a personalized structure to be composed at will according to his or her aesthetic and functional needs CA 2 992 733 discloses a furnishing element with a fastening system, which is easily removable from the panels making assembling and disassembling quick and easy.

### PRESENTATION OF THE INVENTION

To resolve the aforementioned problems, to date various solutions have been proposed in the art to allow modular-type furnishing elements to be connected.

Such solutions in the prior art, however, involve some disadvantages and limitations.

In particular, the known solutions typically employ threaded connection means which, on the one hand, guarantee a secure fixing between the furnishing elements, but on the other, tend to damage the respective insertion seats, as the furnishing elements are made of wood. Such damage increases above all in the case of repeated assembly and disassembly, which may occur in connection with the type of modular furnishing element of the present invention. In other words, the user having available a modular structure may modify its composition repeatedly during the useful life of the furnishing element.

Moreover, the threaded connection is very often visible, albeit in a limited way, for example, on the sides of the structure.

The current trend, however, is that of minimalism, whereby users do not want to have any visible connection elements.

Furthermore, the connections with threaded elements are not particularly quick to implement as they require screwing various connection elements into the wood or in appropriate seats made in the wood and possibly covered. Such solutions are known, for example, from US 2012/131787 A1.

All in all, the need is therefore felt to resolve the drawbacks and limitations cited with reference to the

### prior art.

In particular, the need is felt to create a connection between interlocking modules of furnishing elements that is quick to implement, invisible, and may be implemented repeatedly during assembly, disassembly and modification of the configuration of the structure without damaging the connection seats thereof.

Moreover, such assembly must be easy to use and must not require excessive space/encumbrance.

Such requirement is satisfied by a furnishing element according to claim 1 and by an assembly method of a furnishing element in accordance with claim 13 .

### DESCRIPTION OF THE DRAWINGS

Further features and advantages of the present invention will become more comprehensible from the following description of its preferred and non-limiting embodiments, wherein:

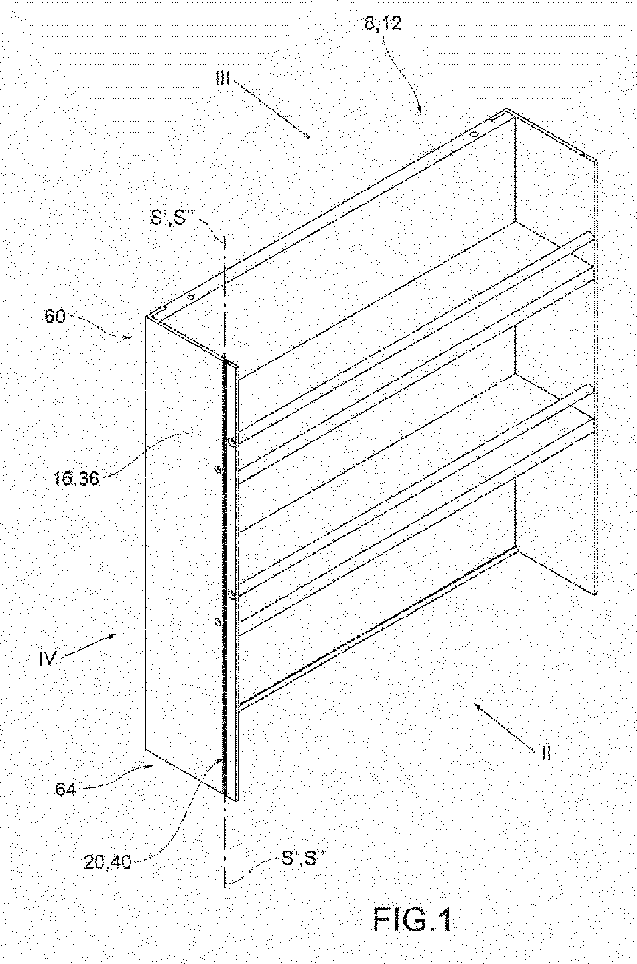

figure 1 is a perspective view of a module of a furnishing element in accordance with the present invention;

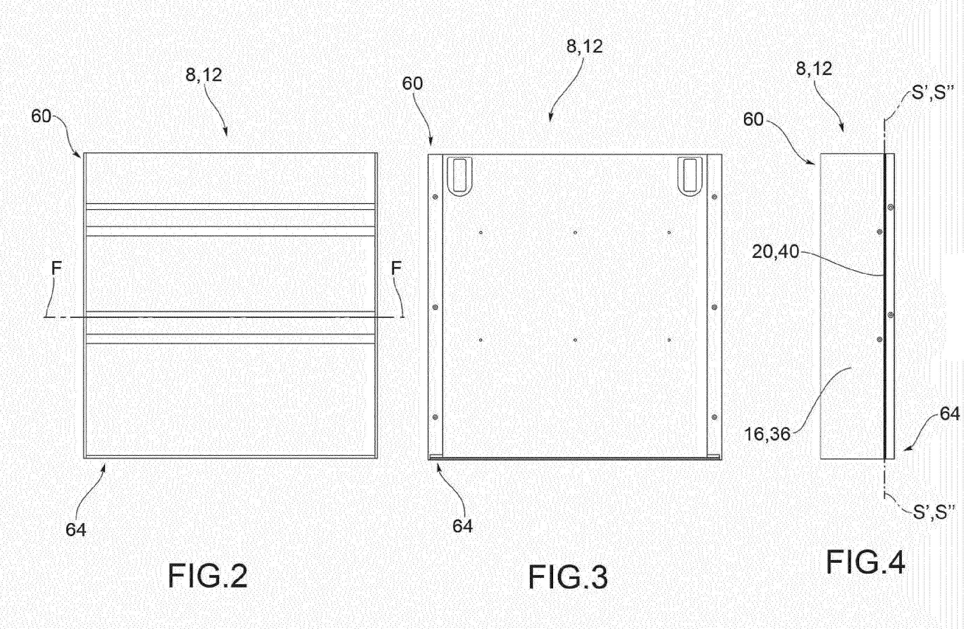

figure 2 is a front view of the module of figure 1, from the side of the arrow II of figure 1;
figure 3 is a rear view of the module of figure 1, from the side of the arrow III of figure 1;
figure 4 is a side view of the module of figure 1, from the side of the arrow IV of figure 1;

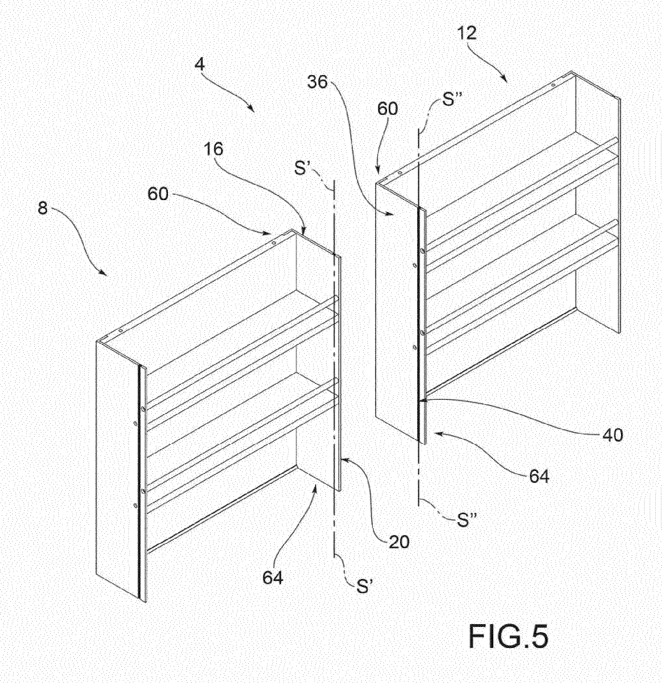

figure 5 is a perspective view of a furnishing element comprising two interlocking modules, in a juxtaposition step of assembly;

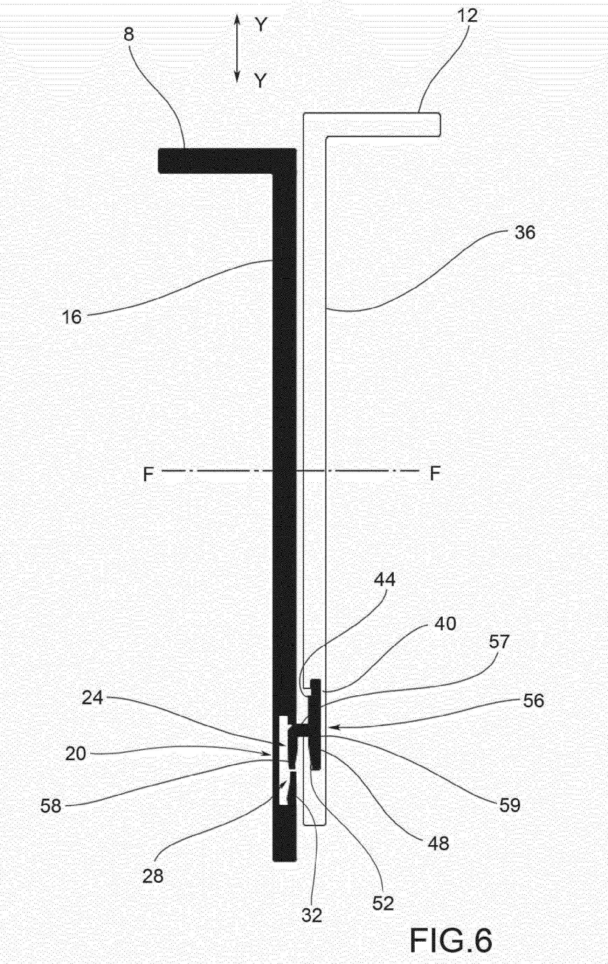

figure 6 is a cross-sectional view of two modules in accordance with the present invention;

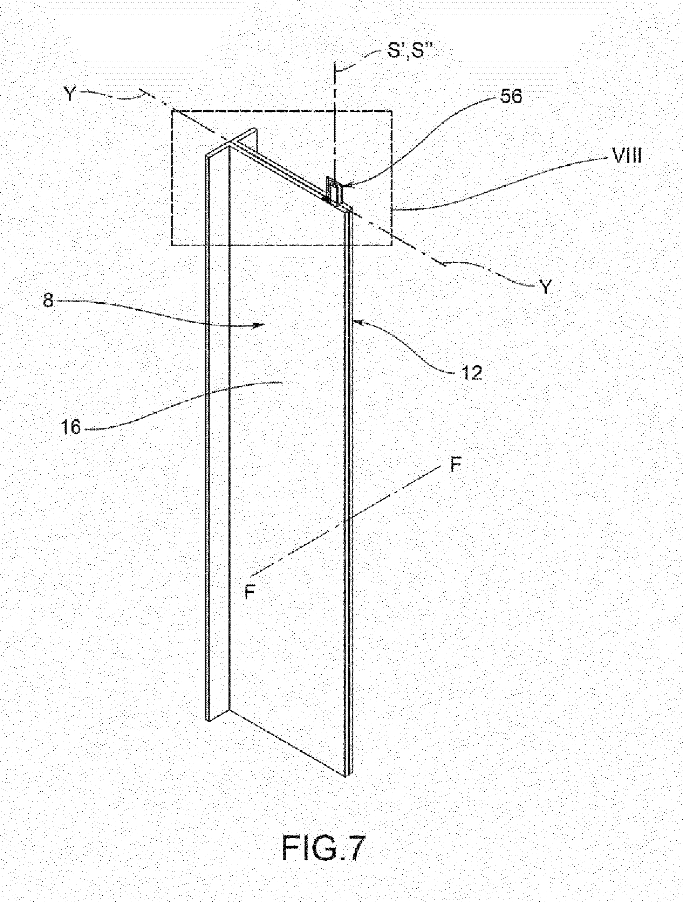

figure 7 is a perspective view of an assembly detail of two interlocking modules;

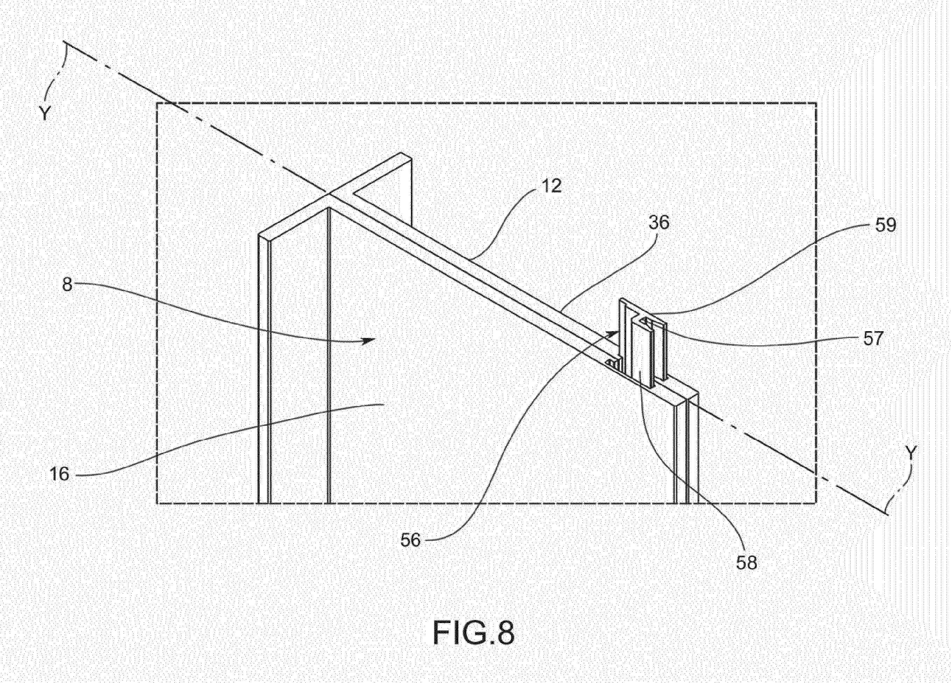

figure 8 is a view of the enlarged detail VIII indicated in figure 7;
figure 9 represents a succession of cross-sectional views of successive assembly steps to link two modules to each other in accordance with the present invention.

The elements or parts of elements in common between the embodiments described hereinafter will be indicated at the same numerical references.

### DETAILED DESCRIPTION

With reference to the aforementioned figures, a total schematic view of a furnishing element according to the present invention is collectively indicated at 4.

For the purposes of the present invention, it is necessary to specify that the term "furnishing element" means any element of furniture, of any size, shape and material.

For example, the furnishing element may be or may include a display case, a bookcase, shelving, a kitchen or bathroom counter top, and so on. Such list is only indicative and not exhaustive.

For the purposes of the present invention, the materials of said furnishing element 4, which may, for example, include wood or also plastic or metallic materials, are not relevant.

The furnishing element 4 comprises at least a first and a second mutually interlockable module 8,12, wherein the first module 8 is provided with a first wall 16 having a first seat 20.

The first seat 20 has a first main longitudinal extension S'-S' and, with respect to a cross-sectional plane perpendicular to the first main longitudinal extension S'-S', has a first front branch 24 which emerges on the first wall 16, and at least one first transverse branch 28 incident and contiguous with said first front branch 24.

The sizing and positioning of said first front branch 24 and first transverse branch 28 is such whereby the first seat 20 defines a first undercut 32 with respect to a separation direction F-F between the modules 8, 12.

The second module 12 is provided with a second wall 36 having a second seat 40, which has a second main longitudinal extension S"-S".

Preferably, the first and second main longitudinal extensions S'-S', S"- S" are parallel to each other in the assembled configuration of the modules 8,12.

The second seat 40, with respect to a cross-sectional plane perpendicular to the second main longitudinal extension S"-S", has a second front branch 44, which emerges on the second wall 36 and at least a second transverse branch 48, incident and contiguous with said second front branch 44.

The sizing and positioning of said second front branch 44 and second transverse branch 48 is such whereby the second seat 40 defines a second undercut 52 with respect to a separation direction F-F between the modules 8, 12.

The furnishing element 4 comprises an attachment key 56 at least partially counter-shaped with respect to said first and second seats 20,40; said first and second walls 16,36, in an assembled configuration of the furnishing element 4, mutually face each other in such a way as to align the respective first and second front branches 24,44.

The attachment key 56 is inserted into said first and second seats 20,40 so as to realize a constraint to the movement of the modules 8,12 according to a separation direction F-F between the modules 8,12, perpendicular to the respective first and second walls 16,36.

Such constraint occurs due to said first and second undercuts 32,52 with respect to the separation direction F-F between modules 8,12.

The attachment key 56 has a central section 57 ending in two opposite appendages 58,59, wherein a first appendage 58 has an extension which is less than or equal to said first front branch 24 of the first seat 20, so as to be insertable through the first front branch 24 along an insertion direction perpendicular to the respective first and second walls 16,36. Thus, the first appendage 58 may be locked within the first seat 20 according to a sliding direction Y-Y parallel to said first transverse branch 28 so as to misalign at least partially the first appendage 58 with respect to the first front branch 24 and abut the first appendage 58 against the first undercut 32.

The second appendage 59 is opposite to the first appendage 58 with respect to the central section 57, wherein the second appendage 59 fastens the attachment key 56 to the second module 12 on the second seat 40.

For example, the second appendage 59 extends from opposite sides to the central section 57 along the sliding direction Y-Y.

Preferably, the second appendage 59 has a total extension greater than the first and second front branches 24,44 of the first and second seats 20,40 respectively.

The attachment key 56, in an assembled configuration, is completely inserted inside said first and second seats 20,40 so as not to be visible from the outside. In this way the user has no way of noting the presence of any attachment means between the modules 8,12.

According to one embodiment, the first and second seats 20,40 of each module are shaped to emerge only at said first and second walls so as not to be visible from the outside in the juxtaposed and assembled configuration of said modules 8,12 on the side of said first and second walls 16,36.

The attachment key 56 is shaped so as to be inserted into said first and second seats 20,40 according to an interlocking coupling: in this way the coupling avoids the possibility of mutual movements between the modules 8,12 which would be possible in case of play.

According to a possible embodiment, the attachment key 56 has a longitudinal length L that is lower than or equal to said first and second main longitudinal extension S′-S′,Sʺ- Sʺ. In this way, in an assembled configuration, the attachment key 56 is housed completely inside the modules 8,12 and therefore out of sight.

According to one embodiment, said first and second seats 20,40 pass respectively along the first and second main longitudinal extensions S'-S',S"-S" of the respective modules 8,12.

It is also possible to make modules 8,12 which comprise said first and second seats 20,40 at the upper 60 and lower 64 ends of each module 8,12, said upper and lower ends 60,64 being opposite to each other with respect to the main longitudinal extensions S'-S',S"-S"; such seats 20,40 of each module 8,12 may be separated from one another.

For example, the first seat 20 emerges at at least one upper end 60 of the first wall 16, and the second seat 40 emerges at at least one upper end 60 of the second wall, said upper ends 60 facing each other in such a way as to allow the attachment key to be inserted simultaneously within said seats 20,40.

According to a possible embodiment, the first transverse branch 28 is substantially perpendicular to the first front branch 24, and/or the second transverse branch 48 is substantially perpendicular to the second front branch 44.

As seen, the modules 8,12 are mutually linked to each other by at least one attachment key 56.

According to a preferred embodiment, the seats 20,40 are the same: the attachment key 56 is reversible and therefore it is possible to reverse the assembly simply by turning the same key.

Preferably, the attachment key 56 is inserted in one of the two seats 20,40 along the main longitudinal direction S'-S',S"-S" from above or below, indifferently.

Each module 8,12 may in turn be linked to a frame which is in turn anchored to a panel or wall, based on the requirements of size and the type of furnishing element 4 that one intends to compose.

Moreover, it is also possible to provide for said modules 8,12 to rest on a support arranged perpendicular to said first and second main longitudinal extension S'-S',S"-S"; such a support may, for example, be composed of a kitchen counter top, a table, an open-plan structure, and so on.

The assembly method of a furnishing element in accordance with the present invention will now be described.

In particular, the assembly method of a furnishing element comprises the steps of:
- providing at least a first and a second module 8,12 interlocking with each other,
- wherein the first module 8 is provided with a first wall 16 having a first seat 20, the first seat 20 having a first main longitudinal extension S'-S', wherein the first seat 20, with respect to a cross-sectional plane perpendicular to the main longitudinal extension S'-S', has a first front branch 24 which emerges on the first wall 16 and at least a first transverse branch 28 incident and contiguous with said first front branch 24,
- wherein the second module 12 is provided with a second wall 36 having a second seat 40, the second seat 40 having a second main longitudinal extension S"-S", wherein the second seat 40, with respect to a cross-sectional plane perpendicular to the second main longitudinal extension S"-S", has a second front branch 44 which emerges on the second wall 36 and at least a second transverse branch 48 incident and contiguous with said second front branch 44,

- providing an attachment key 56, at least partially counter-shaped to said first and second seats 20,40,
- the attachment key 56 having a central section 57 ending in two opposite appendages 58,59, wherein a first appendage 58 has an extension less than or equal to said first branch 24 of the first seat 20,
- joining the attachment key 56 to the second module 12, inserting the second appendage in the second seat 40 with shaped coupling,
- juxtaposing the second module 12 with the first module 8 so as to insert the first appendage 58 through the first front branch 24 along an insertion direction perpendicular to the respective first and second walls 16,36 and locking it inside the first seat 20 in a sliding direction Y-Y parallel to said first transverse branch 28 so as to misalign at least partially the first appendage 58 with respect to the first front branch and achieve an undercut with respect to said insertion direction.

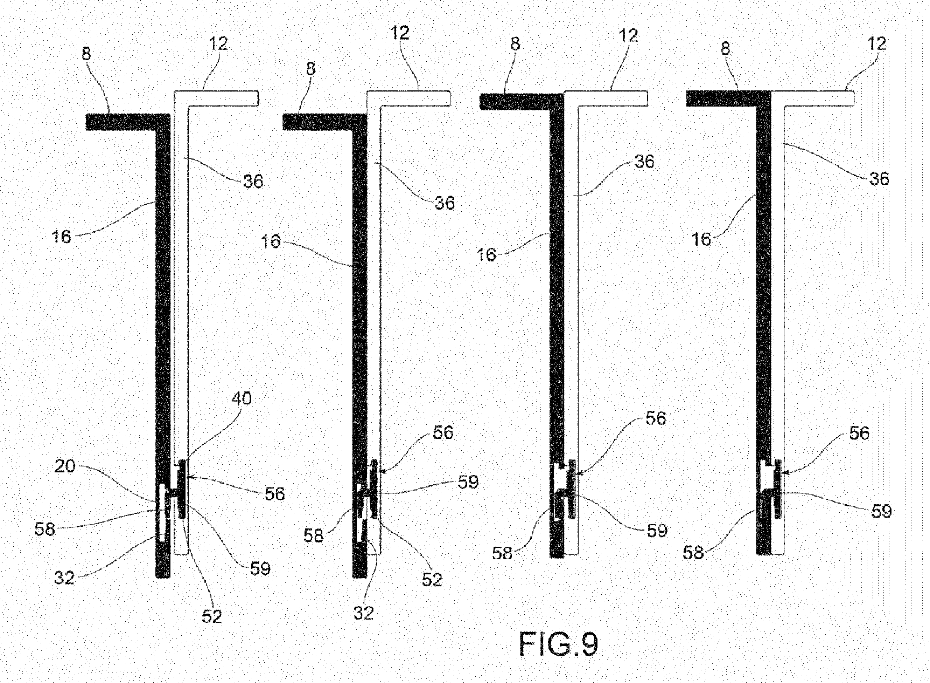

The sequence of the assembly steps is shown in figure 9.

Obviously, it is possible to reverse the assembly sequence, for example by inserting the attachment key 56 first in the first seat 20 and then in the second seat 40 upon the mutual juxtaposition of the modules 8,12.

In this way, it is possible to couple the modules together without having to fit the attachment key from above; in other words, the coupling between the modules 8,12 occurs simply by placing the modules side-by-side so the respective seats 20,40 face each other, inserting the attachment key 56 in the first seat 20, through the first front branch 24, and finally tightening the coupling through the mutual sliding of the modules 8,12 along the sliding direction Y-Y.

Therefore, in order to couple the two modules 8,12, one needs simply the space for positioning the same modules, as no attachment tools or ladders are required to reach the same or to insert the attachment keys and the like from above.

Likewise, disassembling the modules 8,12 is immediate as one must simply move the modules 8,12 along the sliding direction Y-Y just enough to disengage the attachment key 56 from the first seat 20 and then move the modules away from each other; also in this case, no tools of any kind are needed, nor stairs or the like.

As may be appreciated from the description, the furnishing element and the assembly method thereof according to the invention allows the disadvantages of the prior art to be overcome.

In particular, the use of shaped connection means incorporated within the modules allows a secure and durable attachment of the total furnishing element to be obtained.

The shaped connection means satisfy the requirements of minimalism and invisibility demanded by users.

Moreover, the shaped connection means do not in any way damage the modules, which may then be disassembled and reassembled repeatedly without thereby creating any damage or imperfections in the structure.

Collectively, the present invention allows therefore for a connection to be made between interlocking modules of furnishing elements that is quick to realize, is not visible and may be realized repeatedly during assembly, disassembly and modification of the configuration of the furnishing element without damaging the connection seats thereof.

Moreover, the assembly of the furnishing elements is particularly simple as it does not require the insertion of keys from the top of the modules but simply interlocking and sliding between the modules themselves.

A person skilled in the art, in the object of satisfying contingent and specific requirements, may make numerous modifications and variations to the furnishing elements described above, all of which are within the scope of the invention as defined by the following claims.

## Claims

1. Furnishing element (4) comprising
- at least a first and a second module (8,12) interlocking with each other,
- wherein the first module (8) is provided with a first wall (16) having a first seat (20), the first seat (20) having a first main longitudinal extension (S'-S'), wherein the first seat (20), with respect to a cross-sectional plane perpendicular to the first main longitudinal extension (S'-S'), has a first front branch (24) which emerges on the first wall (16) and at least a first transverse branch (28) incident and contiguous with said first front branch (24), wherein the first front branch (24) and the first transverse branch (28) define a first undercut (32) in a separation direction F-F of the modules (8,12),
- the second module (12) is provided with a second wall (36) having a second seat (40), the second seat (40) having a second main longitudinal extension (S"-S"), wherein the second seat (40), with respect to a cross-sectional plane perpendicular to the second main longitudinal extension (S"-S") has a second front branch (44) which emerges on the second wall (36) and at least a second transverse branch (48) incident and contiguous with said second front branch (44),
**characterised in that**
- the furnishing element (4) comprises an attachment key (56), at least partially counter-shaped to said first and second seats (20,40),
- wherein said first and second walls (16,36) face each other so as to align the respective first and second front branches (24,44),
- the attachment key (56) having a central section (57) ending in two opposite appendages (58,59), wherein a first appendage (58) has an extension less than or equal to said first branch (24) of the first seat (20), so as to be inserted through the first front branch (24) in an insertion direction perpendicular to the respective first and second walls (16,36) and locked inside the first seat (20) in a sliding direction (Y-Y) parallel to said first transverse branch (28) so as to misalign at least partially the first appendage (58) with respect to the first front branch (24) and abut the first appendage (58) against the first undercut (32).

2. Furnishing element (4) according to claim 1, wherein the second appendage (59) is opposite to the first appendage (58) with respect to the central section (57), the second appendage (59) fastening the attachment key (56) to the second module (12) on the second seat (40).

3. Furnishing element (4) according to claim 2, wherein the second appendage (59) extends from opposite sides to the central section (57) in the sliding direction (Y-Y).

4. Furnishing element (4) according to claim 2 or 3, wherein the second appendage (59) has a total extension greater than the first and second front branches (24,44) of the first and second seats (20,40) respectively.

5. Furnishing element (4) according to claim 2, 3 or 4, wherein the second front branch (44) and the second transverse branch (48) define a second undercut (52) with respect to the separation direction (F-F) of the modules (8,12), so as to realize a constraint of the second appendage (59) on the second seat (40).

6. Furnishing element (4) according to any of the preceding claims, wherein the attachment key (56), in the assembled configuration is entirely inserted inside said seats (20,40) so as not to be visible from the outside.

7. Furnishing element (4) according to any of the preceding claims, wherein the seats (20,40) of each module (8,12) are shaped to emerge only at said first and second walls (16,36) so as not to be visible from outside, in the juxtaposed and assembled configuration of said modules (8,12) on the side of said first and second walls (16,36).

8. Furnishing element (4) according to any of the preceding claims, wherein the attachment key (56) is shaped so as to be inserted in said seats (20,40) according to an interlocking coupling.

9. Furnishing element (4) according to any one of the claims from 1 to 8, wherein the attachment key (56) has a longitudinal length less than or equal to said main first and second longitudinal extensions (S'-S',S"-S").

10. Furnishing element (4) according to any of the preceding claims, wherein the first transverse branch (28) is substantially perpendicular to the first front branch (24) and/or the second transverse branch (48) is substantially perpendicular to the second front branch (44) .

11. Furnishing element (4) according to any of the preceding claims, wherein said modules (8,12) rest on a support arranged perpendicular to said first and second main longitudinal extensions (S'-S', S"-S").

12. Furnishing element (4) according to any of the preceding claims, wherein said modules (8,12) are attached to a frame in turn anchored to a panel or wall.

13. Assembly method of a furnishing element (4) comprising the steps of:
- providing at least a first and a second module (8,12) interlocking with each other,
- wherein the first module (8) is provided with a first wall (16) having a first seat (20), the first seat (20) having a first main longitudinal extension (S'-S'), wherein the first seat (20), with respect to a cross-sectional plane perpendicular to the main longitudinal extension (S'-S'), has a first front branch (24) which emerges on the first wall (16) and at least a first transverse branch (28) incident and contiguous with said first front branch (24),
- wherein the second module (12) is provided with a second wall (36) having a second seat (40), the second seat (40) having a second main longitudinal extension (S"-S"), wherein the second seat (40), with respect to a cross-sectional plane perpendicular to the second main longitudinal extension (S"-S"), has a second front branch (44) which emerges on the second wall (36) and at least a second transverse branch (48) incident and contiguous with said second front branch (44),
- providing an attachment key (56), at least partially counter-shaped to said first and second seats (20,40),
- the attachment key (56) having a central section (57) ending in two opposite appendages (58,59), wherein a first appendage (58) has an extension less than or equal to said first branch (24) of the first seat (20),
- joining the attachment key (56) to the second module (12), inserting the second appendage in the second seat (40), with shaped coupling,
- juxtaposing the second module (12) with the first module (8) so as to insert the first appendage (58) through the first front branch (24) along an insertion direction perpendicular to the respective first and second walls (16,36) and locking it inside the first seat (20) in a sliding direction (Y-Y) parallel to said first transverse branch (28) so as to misalign at least partially the first appendage (58) with respect to the first front branch (24) and obtain an undercut with respect to said insertion direction.

## Patentansprüche

1. Einrichtungselement (4), umfassend
- wenigstens ein erstes und ein zweites Modul (8, 12), welche ineinandergreifen,
- wobei das erste Modul (8) mit einer ersten Wand (16) bereitgestellt ist, welche einen ersten Sitz (20) aufweist, wobei der erste Sitz (20) eine erste longitudinale Haupterstreckung (S'-S') aufweist, wobei der erste Sitz (20) in Bezug auf eine Schnittebene senkrecht zu der ersten longitudinalen Haupterstreckung (S'-S') einen ersten vorderen Zweig (24), welcher an der ersten Wand (16) hervortritt, und wenigstens einen ersten transversalen Zweig (28) aufweist, welcher mit dem ersten vorderen Zweig (24) zusammenfällt und daran angrenzt, wobei der erste vordere Zweig (24) und der erste transversale Zweig (28) in einer Trennrichtung (F-F) der Module (8, 12) einen ersten Hinterschnitt (32) definieren,
- wobei das zweite Modul (12) mit einer zweiten Wand (36) bereitgestellt ist, welche einen zweiten Sitz (40) aufweist, wobei der zweite Sitz (40) eine zweite longitudinale Haupterstreckung (S"-S") aufweist, wobei der zweite Sitz (40) in Bezug auf eine Schnittebene senkrecht zu der zweiten longitudinalen Haupterstreckung (S"-S") einen zweiten vorderen Zweig (44), welcher an der zweiten Wand (36) hervortritt, und wenigstens einen zweiten transversalen Zweig (48) aufweist, welcher mit dem zweiten vorderen Zweig (44) zusammenfällt und daran angrenzt,
**dadurch gekennzeichnet, dass**
- das Einrichtungselement (4) einen Befestigungsschlüssel (56) umfasst, welcher wenigstens teilweise zu dem ersten und dem zweiten Sitz (20, 40) gegengeformt ist,
- wobei die erste und die zweite Wand (16, 36) einander zugewandt sind, um den ersten bzw. den zweiten vorderen Zweig (24, 44) auszurichten,
- wobei der Befestigungsschlüssel (56) einen zentralen Abschnitt (57) aufweist, welcher in zwei entgegengesetzten Fortsätzen (58, 59) endet, wobei ein erster Fortsatz (58) eine Erstreckung aufweist, welche kleiner oder gleich dem ersten Zweig (24) des ersten Sitzes (20) ist, um durch den ersten vorderen Zweig (24) in einer Einführungsrichtung senkrecht zu der ersten bzw. der zweiten Wand (16, 36) eingeführt zu werden und innerhalb des ersten Sitzes (20) in einer Gleitrichtung (Y-Y) parallel zu dem ersten transversalen Zweig (28) verriegelt zu werden, um den ersten Fortsatz (58) in Bezug auf den ersten vorderen Zweig (24) wenigstens teilweise zu verlagern und den ersten Fortsatz (58) gegen den ersten Hinterschnitt (32) anstoßen zu lassen.

2. Einrichtungselement (4) nach Anspruch 1, wobei der zweite Fortsatz (59) dem ersten Fortsatz (58) in Bezug auf den zentralen Abschnitt (57) entgegengesetzt ist, wobei der zweite Fortsatz (59) den Befestigungsschlüssel (56) an dem zweiten Sitz (40) an dem zweiten Modul (12) befestigt.

3. Einrichtungselement (4) nach Anspruch 2, wobei sich der zweite Fortsatz (59) von entgegengesetzten Seiten in der Gleitrichtung (Y-Y) zu dem zentralen Abschnitt (57) erstreckt.

4. Einrichtungselement (4) nach Anspruch 2 oder 3, wobei der zweite Fortsatz (59) eine Gesamterstreckung aufweist, welche größer als der erste und der zweite Zweig (24, 44) des ersten bzw. des zweiten Sitzes (20, 40) ist.

5. Einrichtungselement (4) nach Anspruch 2, 3 oder 4, wobei der zweite vordere Zweig (44) und der zweite transversale Zweig (48) in Bezug auf die Trennrichtung (F-F) der Module (8, 12) einen zweiten Hinterschnitt (52) definieren, um eine Zwangsverbindung des zweiten Fortsatzes (59) an dem zweiten Sitz (40) zu realisieren.

6. Einrichtungselement (4) nach einem der vorhergehenden Ansprüche, wobei der Befestigungsschlüssel (56) in der montierten Konfiguration vollständig in die Sitze (20, 40) eingeführt ist, um von dem Äußeren nicht sichtbar zu sein.

7. Einrichtungselement (4) nach einem der vorhergehenden Ansprüche, wobei die Sitze (20, 40) jedes Moduls (8, 12) derart geformt sind, dass sie in der gegenübergestellten und montierten Konfiguration der Module (8, 12) an der Seite der ersten und der zweiten Wand (16, 36) nur an der ersten und der zweiten Wand (16, 36) hervortreten, um von außerhalb nicht sichtbar zu sein.

8. Einrichtungselement (4) nach einem der vorhergehenden Ansprüche, wobei der Befestigungsschlüssel (56) derart geformt ist, dass er gemäß einer ineinandergreifenden Kopplung in die Sitze (20, 40) eingeführt ist.

9. Einrichtungselement (4) nach einem der Ansprüche von 1 bis 8, wobei der Befestigungsschlüssel (56) eine longitudinale Länge aufweist, welche kleiner oder gleich der ersten und der zweiten longitudinalen Haupterstreckung (S'-S', S"-S") ist.

10. Einrichtungselement (4) nach einem der vorhergehenden Ansprüche, wobei der erste transversale Zweig (28) im Wesentlichen senkrecht zu dem ersten vorderen Zweig (24) ist und/oder der zweite transversale Zweig (48) im Wesentlichen senkrecht zu dem zweiten vorderen Zweig (44) ist.

11. Einrichtungselement (4) nach einem der vorhergehenden Ansprüche, wobei die Module (8, 12) an einer Halterung anliegen, welche senkrecht zu der ersten und der zweiten longitudinalen Haupterstreckung (S'-S', S"-S") angeordnet ist.

12. Einrichtungselement (4) nach einem der vorhergehenden Ansprüche, wobei die Module (8, 12) an einem Rahmen angebracht sind, welcher wiederum an einem Paneel oder einer Wand verankert ist.

13. Montageverfahren eines Einrichtungselements (4), umfassend die folgenden Schritte:
- Bereitstellen wenigstens eines ersten und eines zweiten Moduls (8, 12), welche ineinandergreifen,
- wobei das erste Modul (8) mit einer ersten Wand (16) bereitgestellt ist, welche einen ersten Sitz (20) aufweist, wobei der erste Sitz (20) eine erste longitudinale Haupterstreckung (S'-S') aufweist, wobei der erste Sitz (20) in Bezug auf eine Schnittebene senkrecht zu der longitudinalen Haupterstreckung (S'-S') einen ersten vorderen Zweig (24), welcher an der ersten Wand (16) hervortritt, und wenigstens einen ersten transversalen Zweig (28) aufweist, welcher mit dem ersten vorderen Zweig (24) zusammenfällt und daran angrenzt,
- wobei das zweite Modul (12) mit einer zweiten Wand (36) bereitgestellt ist, welche einen zweiten Sitz (40) aufweist, wobei der zweite Sitz (40) eine zweite longitudinale Haupterstreckung (S"-S") aufweist, wobei der zweite Sitz (40) in Bezug auf eine Schnittebene senkrecht zu der zweiten longitudinalen Haupterstreckung (S"-S") einen zweiten vorderen Zweig (44), welcher an der zweiten Wand (36) hervortritt, und wenigstens einen zweiten transversalen Zweig (48) aufweist, welcher mit dem zweiten vorderen Zweig (44) zusammenfällt und daran angrenzt,
- Bereitstellen eines Befestigungsschlüssels (56), welcher wenigstens teilweise zu dem ersten und dem zweiten Sitz (20, 40) gegengeformt ist,
- wobei der Befestigungsschlüssel (56) einen zentralen Abschnitt (57) aufweist, welcher in zwei entgegengesetzten Fortsätzen (58, 59) endet, wobei ein erster Fortsatz (58) eine Erstreckung aufweist, welche kleiner oder gleich dem ersten Zweig (24) des ersten Sitzes (20) ist,
- Verbinden des Befestigungsschlüssels (56) mit dem zweiten Modul (12), den zweiten Fortsatz in den zweiten Sitz (40) einführend, mit einer Formschlusskopplung,
- Gegenüberstellen des zweiten Moduls (12) und des ersten Moduls (8), um den ersten Fortsatz (58) durch den ersten vorderen Zweig (24) entlang einer Einführungsrichtung senkrecht zu der ersten bzw. der zweiten Wand (16, 36) einzuführen und ihn innerhalb des ersten Sitzes (20) in einer Gleitrichtung (Y-Y) parallel zu dem ersten transversalen Zweig (28) zu verriegeln, um den ersten Fortsatz (58) in Bezug auf den ersten vorderen Zweig (24) wenigstens teilweise zu verlagern und in Bezug auf die Einführungsrichtung einen Hinterschnitt zu erhalten.

## Revendications

1. Elément d'ameublement (4) comprenant
- au moins un premier et un second module (8, 12) s'enclenchant mutuellement,
- dans lequel le premier module (8) est pourvu d'une première paroi (16) ayant un premier siège (20), le premier siège (20) ayant une première extension longitudinale principale (S'-S'), dans lequel le premier siège (20), par rapport à un plan en coupe perpendiculaire à la première extension longitudinale principale (S'-S'), a une première patte avant (24) qui émerge sur la première paroi (16) et au moins une première patte transversale (28) incidente et contiguë avec ladite première patte avant (24), dans lequel la première patte avant (24) et la première patte transversale (28) définissent une première contre-dépouille (32) dans une direction de séparation F-F des modules (8, 12),
- le second module (12) est pourvu d'une seconde paroi (36) ayant un second siège (40), le second siège (40) ayant une seconde extension longitudinale principale (S"-S"), dans lequel le second siège (40), par rapport à un plan en coupe perpendiculaire à la seconde extension longitudinale principale (S"-S"), a une seconde patte avant (44) qui émerge sur la seconde paroi (36), et au moins une seconde patte transversale (48) incidente et contiguë avec ladite seconde patte avant (44),
**caractérisé en ce que**
- l'élément d'ameublement (4) comprend une clavette d'attache (56), de forme au moins partiellement complémentaire desdits premier et second sièges (20, 40),
- dans lequel lesdites première et seconde parois (16, 36) sont en face l'une de l'autre de façon à aligner les première et seconde pattes avant (24, 44) respectives,
- la clavette d'attache (56) ayant une section centrale (57) se terminant en deux appendices (58, 59) opposés, dans lequel un premier appendice (58) a une extension inférieure ou égale à ladite première patte (24) du premier siège (20), de façon à être inséré à travers la première patte avant (24) dans une direction d'insertion perpendiculaire aux première et seconde parois (16, 36) respectives et verrouillé à l'intérieur du premier siège (20) dans une direction de coulissement (Y-Y) parallèle à ladite première patte transversale (28) de façon à désaligner au moins partiellement le premier appendice (58) par rapport à la première patte avant (24) et appuyer le premier appendice (58) contre la première contre-dépouille (32).

2. Elément d'ameublement (4) selon la revendication 1, dans lequel le second appendice (59) est opposé au premier appendice (58) par rapport à la section centrale (57), le second appendice (59) fixant la clavette d'attache (56) au second module (12) sur le second siège (40).

3. Elément d'ameublement (4) selon la revendication 2, dans lequel le second appendice (59) s'étend depuis des côtés opposés à la section centrale (57) dans la direction de coulissement (Y-Y).

4. Elément d'ameublement (4) selon la revendication 2 ou 3, dans lequel le second appendice (59) a une extension totale supérieure aux première et seconde pattes avant (24, 44) des premier et second sièges (20, 40) respectivement.

5. Elément d'ameublement (4) selon la revendication 2, 3 ou 4, dans lequel la seconde patte avant (44) et la seconde patte transversale (48) définissent une seconde contre-dépouille (52) par rapport à la direction de séparation (F-F) des modules (8, 12), de façon à réaliser une contrainte du second appendice (59) sur le second siège (40).

6. Elément d'ameublement (4) selon l'une quelconque des revendications précédentes, dans lequel la clavette d'attache (56), dans la configuration assemblée est entièrement insérée à l'intérieur desdits sièges (20, 40) de façon à ne pas être visible depuis l'extérieur.

7. Elément d'ameublement (4) selon l'une quelconque des revendications précédentes, dans lequel les sièges (20, 40) de chaque module (8, 12) sont formés pour émerger uniquement au niveau desdites première et seconde parois (16, 36) de façon à ne pas être visibles depuis l'extérieur, dans la configuration juxtaposée et assemblée desdits modules (8, 12) sur le côté desdites première et seconde parois (16, 36).

8. Elément d'ameublement (4) selon l'une quelconque des revendications précédentes, dans lequel la clavette d'attache (56) est formée de façon à être insérée dans lesdits sièges (20, 40) selon un accouplement d'enclenchement.

9. Elément d'ameublement (4) selon l'une quelconque des revendications 1 à 8, dans lequel la clavette d'attache (56) a une longueur longitudinale inférieure ou égale auxdites première et seconde extensions longitudinales principales (S'-S', S"-S").

10. Elément d'ameublement (4) selon l'une quelconque des revendications précédentes, dans lequel la première patte transversale (28) est sensiblement perpendiculaire à la première patte avant (24) et/ou la seconde patte transversale (48) est sensiblement perpendiculaire à la seconde patte avant (44).

11. Elément d'ameublement (4) selon l'une quelconque des revendications précédentes, dans lequel lesdits modules (8, 12) reposent sur un support agencé perpendiculairement auxdites première et seconde extensions longitudinales principales (S'-S', S"-S").

12. Elément d'ameublement (4) selon l'une quelconque des revendications précédentes, dans lequel lesdits modules (8, 12) sont attachés à un cadre ancré quant à lui à un panneau ou une paroi.

13. Procédé d'assemblage d'un élément d'ameublement (4) comprenant les étapes de :
- fourniture d'au moins un premier et d'un second module (8, 12) s'enclenchant mutuellement,
- dans lequel le premier module (8) est pourvu d'une première paroi (16) ayant un premier siège (20), le premier siège (20) ayant une première extension longitudinale principale (S'-S'), dans lequel le premier siège (20), par rapport à un plan en coupe perpendiculaire à l'extension longitudinale principale (S'-S'), a une première patte avant (24) qui émerge sur la première paroi (16) et au moins une première patte transversale (28) incidente et contiguë avec ladite première patte avant (24),
- dans lequel le second module (12) est pourvu d'une seconde paroi (36) ayant un second siège (40), le second siège (40) ayant une seconde extension longitudinale principale (S"-S"), dans lequel le second siège (40), par rapport à un plan en coupe perpendiculaire à la seconde extension longitudinale principale (S"-S"), a une seconde patte avant (44) qui émerge sur la seconde paroi (36) et au moins une seconde patte transversale (48) incidente et contiguë avec ladite seconde patte avant (44),
- fourniture d'une clavette d'attache (56), de forme au moins partiellement complémentaire desdits premier et second sièges (20, 40),
- la clavette d'attache (56) ayant une section centrale (57) se terminant en deux appendices (58, 59) opposés, dans lequel un premier appendice (58) a une extension inférieure ou égale à ladite première patte (24) du premier siège (20),
- jonction de la clavette d'attache (56) au second module (12), insertion du second appendice dans le second siège (40), avec accouplement de forme,
- juxtaposition du second module (12) avec le premier module (8) de façon à insérer le premier appendice (58) à travers la première patte avant (24) le long d'une direction d'insertion perpendiculaire aux première et seconde parois (16, 36) respectives et son verrouillage à l'intérieur du premier siège (20) dans une direction de coulissement (Y-Y) parallèle à ladite première patte transversale (28) de façon à désaligner au moins partiellement le premier appendice (58) par rapport à la première patte avant (24) et obtenir une contre-dépouille par rapport à ladite direction d'insertion.
